# EUROPEAN PATENT APPLICATION

(11) **EP 1 992 652 A1**
(43) Date of publication of application: **19.11.2008**
(21) Application number: 08156376.9
(22) Date of filing: 16.05.2008
(51) Int. Cl.: C08F 255/02, C08F 283/04, C08F 285/00, C08L 77/00, C08L 51/00, C08L 51/06, C08L 51/08

(54) **Polyacrylate-based polymer**

(30) Priority: 18.05.2007 KR 20070048816
(71) Applicant: Polymersnet Co., Ltd., 204ho, Blockchangup 3-dong, 101-1, Sihwa Industrial Complex 3-ga, Jeongwang-dong Siheung-si, Gyeonggi-do 429-450 (KR)
(72) Inventor: Park, Seongki, GYEONGGI-DO YONGIN-SI (KR); Jin, Changwoo, GUNPO-SI (KR); Cho, Sehyun, Suwon-si 440-720 Kyeonggi-do (KR); Lee, Chanki, GYEONGGI-DO GWANGMYEONG-SI (KR)
(74) Representative: Cabinet Plasseraud

(57) **Abstract**

The present invention comprises material resin comprising polyamide or pclyethylene-based resin; and polyacrylate copolymer obtained by absorption of acrylate monomer, polymerization initiator and functional monomer chosen from among acrylic acid, methacrylic acid, and a mixture of the acrylic acid and the methacrylic acid into the material resin and subsequent polymerization, providing polyacrylate-based polymer, where 128 to 955 parts by weight of the polyacrylate copolymer are used for every 100 parts by weight of the material resin.

## Description

This non-provisional application claims priority of Patent Application No. 10-2007-0048816 filed in Korea on May 18, 2007, the entire contents of which are hereby incorporated by reference.

### BACKGROUND

### Field

The document relates to polyacrylate-based polymer.

### Related Art

Polyamide-based resin has excellent tensile strength, flexural strength, flexural modulus, thermal endurance, and chemical resistance and excellent balance of overall physical properties, being widely used all across industries comprising automotive industry, sports, and so on.

In particular, a component made from polyamide-based resin is usually characterized by its toughness. Among engineering plastic resin, improving toughness is relatively easy for polyamide-based resin. Since very tough engineering plastic resin can be obtained by reinforcement of impact strength, polyamide-based resin with reinforced impact strength occupies more than 10 percent of the entire polyamide-based resin. Conventional technique for reinforcing impact strength of polyamide-based resin was to use a basin of ethylene-propylene rubber or ethylene-octene rubber with additives of functional resin formed by chemical bonding of maleic acid anhydride. To obtain as much impact strength as needed, however, considerable amount of functional resin should have been added, leading to degradation of other physical properties. Also, as considerable amount of expensive functional resin was added, cost inflation was unavoidable. Therefore, there exists a need for manufacturing technology for reinforcement which can provide equal or higher impact strength to polyamide-based resin with a smaller quantity than that of conventional functional resin.

### SUMMARY

The present invention has been made in an effort to provide polyacrylate-based polymer having excellent mechanical properties.

To achieve the above advantages, the present invention comprises material resin comprising polyamide or polyethylene-based resin; and polyacrylate copolymer obtained by absorption of acrylate monomer, polymerization initiator and functional monomer chosen from acrylic acid, methacrylic acid, and a mixture of the acrylic acid into the material resin and subsequent polymerization, providing polyacrylate-based polymer, where 128 to 955 parts by weight of the polyacrylate copolymer are used for every 100 parts by weight of the material resin.

In one aspect, polyacrylate-based polymer comprises material resin comprising polyamide or polyethylene-based resin and poly-acrylate copolymer obtained by absorption of acrylate monomer, functional monomer, and polymerization initiator into the material resin and subsequent polymerization.

Polyamide-based resin is exemplified by polyamide 6 while polyethylene-based resin is exemplified by polyethylene copolymer or polyethylene with pendant functional groups.

Polyethylene copolymer can be of more than one kind selected from among poly (ethylene-co-methylacrylate), poly (ethylene-co-ethylacrylate), poly(ethylene-co-butylacrylate), poly(ethylene-co-acrylic acid), poly(ethylene-co-methacrylic acid), poly(ethylene-co-glycidyl methacrylate), poly(ethylene-co-vinylacetate), poly(ethylene-co-acrylamide), poly(ethylene-co-acrylonitrile) and poly(ethylene-co-maleic acid).

Polyethylene with pendant functional groups is exemplified by poly(ethylene-co-1-octene), poly(ethylene-co-1-butene), poly(ethylene-co-propylene), poly(ethylene-co-propylene-co-diene) or a blend of more than one kind of the above.

Material resin can use a blend of the aforementioned polyamide-based resin and polyethylene as well as the polyamide-based or polyethylene-based resin.

Acrylate monomer can use alkyl acrylate monomer or alkyl methacrylate monomer, or a mixture of the two.

Exemplary alkyl acrylate has one or more, preferably two or more, carbon atoms within alkyl chain. The alkyl acrylate can be exemplified by methyl acrylate, ethyl acrylate, or butyl acrylate, but is not limited to the above. Alkyl acrylate has an effect of improving processability and surface illumination of a final product.

Alkyl methacrylate may have one through eighteen carbon atoms within alkyl chain. In particular, alkyl methacrylate adjusts action of functional monomer, preventing viscosity of reformed polyamide-based resin from abruptly rising. To be effective for the above action, employed alkyl methacrylate may have one through four carbon atoms. The alkyl methacrylate is exemplified by methyl methacrylate, ethyl methacrylate, or butyl methacrylate, but is not limited to the above.

As for functional monomer, acrylic acid, methacrylic acid, or a mixture of acrylic acid and methacrylic acid can be used and is not limited to the above.

A polymerization initiator is used to obtain polymer from spontaneous radical reaction and is exemplified by azobis-isobutyro-nitrile, benzoyl peroxide, lauroyl peroxide, t-butyl peroxide, dicumyl peroxide, t-butyl peracetate, 2, 2-bis (t-butylperoxy) butane, 2, 5-bis (t-butylperoxy)-2, 5-dimethyl-3-hexyne, or 2, 5-bis (t-butylperoxy)-2, 5-dimethylhexane but is not limited to the above. A polymerization initiator can be used selectively according to the type of material resin or types of acrylate monomer and functional monomer.

In another aspect, polyacrylate-based polymer can be formed by absorption of acrylate monomer, functional monomer, and polymerization initiator into material resin comprising polyamide or polyethylene resin dispersed (distributed) in water and subsequent polymerization of the above monomers. According to the polymerization of these monomers in water, polyacrylate polymer resin can be formed so that 128 to 955 parts by weight of the polyacrylate copolymer are dispersed for every 100 parts by weight of the material resin.

The present invention also related to the process for manufacturing a polyacrylate-based polymer, having two or more steps of polymerization, including : first-polymerization step of absorbing 50 to 200 parts by weight of acryl monomer and polymerization initiator into 100 parts by weight of material resin comprising polyamide or polyethylene-based resin dispersed in 500 to 1000 parts by weight of water, and first-polymerizing the monomers; and second-polymerization step of absorbing 50 to 200 parts by weight of acrylate monomer, 2 to 35 parts by weight of functional monomer chosen from among acrylic acid, methacrylic acid and a mixture of the acrylic acid and the methacrylic acid, and polymerization initiator, into 100 parts by weight of the products from the said first-polymerization, and second-polymerizing the monomers; wherein 0.2 to 2.5 mol % of the polymerization initiator is used for total sum of molecular numbers of the monomers and polymerization initiator in each of first and second polymerization.

Further, the first-polymerization step further comprises absorption of 0.1 to 15 parts by weight of a functional monomer into 100 parts by weight of said material resin.

### DETAILED DESCRIPTION

Hereinafter, a method for fabricating polyacrylate-based polymer resin according to one embodiment of the present invention will be described in detail.

(First polymerization step)

First, water, material resin, acrylate monomer, functional monomer, and polymerization initiator are added to a reactor equipped with a stirrer, a heater, and a cooler, after which the reactor is sealed. At this moment, material resin can be in a state of pellet and 500 to 1000 parts by weight of water can be used for every 100 parts by weight of material resin.

50 to 200 parts by weight of acrylate monomer can be used for every 100 parts by weight of material resin. If more than 50 parts by weight of acrylate monomer are used, absorption of acrylate monomer and functional monomer into a product made from polymerization of more than second order can become smooth. If less than 200 parts by weight of acrylate monomer are used, since an amount of monomer not absorbed into material resin can become smaller, polymerization yield can be higher and chances of occurrence of a problem in a post-process such as waste water treatment can be lower.

0.01 to 15 parts by weight of functional monomer can be used for every 100 parts by weight of material resin. If more than 0.01 parts by weight of functional monomer are used, absorption of functional monomer into a product made from polymerization of more than second order can be enhanced and reinforcement of impact strength of first order polymer and dispersion for second order polymer can be enhanced. If less than 15 parts by weight of functional monomer are used, polymerization or individual polymerization of material resin in water can be blocked while monomers are not absorbed into material resin.

For the total sum of molecular numbers of acrylate monomer, functional monomer, and polymerization initiator, 0.2 to 2.5 mol % of polymerization initiator can be used.

If more than 0.2 mol % of polymerization initiator is used for the total sum of molecular numbers of monomers and polymerization initiator, polymerization of monomers can be sufficiently induced so that failure of first order polymerization or mass creation of non-reactive acrylate monomers due to low degree of transformation can be avoided. If less than 2.5 mol %t of polymerization initiator is used for the total sum of molecular numbers of monomers and polymerization initiator, creation of polyacrylate polymer of ultra low molecular weight can be prevented so that drying of first order polymer and process management can be easily carried out.

Next, while input materials are being stirred, nitrogen gas of high pressure is fed into a sealed reactor and then discharged so that oxygen is removed from the reactor. Temperature of the reactor is then raised to an absorption temperature of 45 to 120 according to a selected polymerization initiator, after which acrylate monomer, functional monomer, and polymerization initiator are absorbed into material resin. From 1 to 5 hr for absorption, is needed depending on the type of material resin and the type of acrylate monomer.

Acrylate monomer, functional monomer, and polymerization initiator are absorbed into material resin pellet and decomposition of polymerization initiator and polymerization of monomers are induced by stirring them together with water in the reactor and raising temperature. Temperature in the reactor is adjusted according to appropriate decomposition temperature of employed polymerization initiator. Acrylate monomer, functional monomer, and polymerization initiator absorbed in material resin start polymerization reaction in the pellet, forming polyacrylate copolymer.

Polymerization reaction time requires 2 to 10 hours according to the types of material resin, monomers, and polymerization initiator. After termination of first order polymerization reaction, the reactor is sufficiently cooled down and a reaction mixture is filtered out, obtaining a first order polymer. After cleansing a first order polymer with warm water more than once, the first order polymer is dried under drying conditions appropriate to employed material resin and monomers and water is completely removed.

(Second polymerization step)

Polymer product made from first polymerization, acrylate monomer, functional monomer, and polymerization initiator are input together into a reactor, and second polymerization is conducted in the same way of first polymerization.

50 to 200 parts by weight of acrylate monomer can be used for every 100 parts by weight of the product of first polymerization. If more than 50 parts by weight of acrylate monomer are used, in spite of content of functional monomer, significant degradation of impact strength due to lack of polyacrylate copolymer to be polymerized can be prevented; when less than 200 parts are used, degradation of mechanical property such as toughness of a final product can be prevented.

2 to 35 parts by weight of functional monomer can be used for every 100 parts by weight of product of first polymerization. If more than 2 parts by weight of functional monomer are used, functionality such as impact strength can be sufficiently improved so that at the time of mixing polyamide-based resin and a final product, portion of the final product can become larger, thereby preventing manufacturing cost from rising. On the other hand, if less than 35 parts are used, forced operations in mixed milling or mold fabrication can not be needed and degradation of external appearance of molded product or mechanical property can be prevented.

For the total sum of molecular numbers of acrylate monomer, functional monomer, and polymerization initiator employed at second polymerization, 0.2 to 2.5 mol % of polymerization initiator can be used. If more than 0.2 mol % of polymerization initiator is used for the total sum of molecular numbers of monomers and polymerization initiator, polymerization of monomers can be sufficiently induced so that failure of second polymerization or mass creation of non-reactive acrylate monomers due to low degree of transformation can be avoided. If less than 2.5 mol % of polymerization initiator is used for the total sum of molecular numbers of monomers and polymerization initiator, creation of polyacrylate polymer of ultra low molecular weight can be prevented so that drying of second polymer and process management can be easily carried out.

When polymerization reaction is completed, a reactor is sufficiently cooled down and pellet is obtained by filtering out a reaction mixture. Pellet obtained at this stage stays in a swelled state from copolymerization of absorbed acrylate monomer and functional monomer in the pellet. By sufficiently drying out the obtained pellet and removing water completely, polyacrylate-based polymer dispersed (distributed) in material resin is obtained.

In one embodiment of the present invention, it has been described that first polymerization is conducted after absorption of acrylate monomer, functional monomer, and polymerization initiator into material resin and then second polymerization is conducted after absorption of acrylate monomer, functional monomer, and polymerization initiator into product from first polymerization. However, further polymerization can be carried out after second polymerization or only for once (first polymerization only).

On the other hand, it is equally possible that only acrylate monomer and polymerization initiator can be absorbed into material resin for first polymerization and acrylate monomer, functional monomer, and polymerization initiator are absorbed into product from first polymerization, after which second polymerization is conducted. As described above, if functional monomer is added at second order polymerization, functional monomer can be more easily absorbed into pellet made from first order polymerization.

Polyamide-based polymer obtained from the above method can have peculiar functionality by kneading the polyamide-base polymer with polyamide-based resin. However, for the purpose of convenience of use, adjustment of functionality, and reduction of manufacturing cost, polyacrylate-based polymer can be kneaded with different resin before kneading with polyamide-based resin.

As for resin allowed for kneading, one or more than one type of material resin from among those used for fabricating polyacrylate-based polymer can be used and less than 250 parts by weight of kneading resin are used for every 100 parts by weight of polyacrylate-based polymer. Although reinforcement effect of impact strength for polyamide-based resin is still maintained even if more than 250 parts by weight are used, the resultant effect may fall down into that of conventional functional resin, degrading the technical excellence.

Hereinafter, the present invention will be described in detail by using embodiments below but the scope of the present invention is not limited by the embodiments described below.

**Experiment 1: fabrication of polyamide-based resin composition comprising polyacrylate polymer and evaluation of consequent mechanical properties.**

[Experiment example 1]

1. First polymerization

The polyethylene copolymer pellet 600 g, n-butyl acrylate 300.0 g, ethyl acrylate 300.0 g, methacrylic acid 30 g, lauroyl peroxide 13.3 g, and water 4.5 kg were put into a 5L reactor equipped with a stirrer and a heater and the reactor was sealed up. For material resin, poly (ethylene-co-butylacrylate) (manufactured by Dupont, melt index 4 g/10min.) was used as polyethylene copolymer. While reaction mixture was being stirred, high pressure nitrogen gas was fed into the sealed reactor and then discharged, removing oxygen. To reduce oxygen density, the above operation was carried out three times. Subsequently, temperature of the reactor was raised to 55 °C and n-butyl acrylate was absorbed into polyethylene copolymer pellet for two hours. For complete absorption of input monomer, temperature of the reactor was raised to 60 °C and the reactor was stirred for one hour. For polymerization of monomer, temperature of the reactor was raised to 65 °C and the reactor was stirred for one hour; subsequently, the reactor was stirred for one hour after being raised to 70 °C. While heat caused by polymerization being watched, temp. of the reactor was raised and maintained to 75 °C for one hour. Pellet obtained after termination of reaction was dried at 85 °C for six hours in a hot blast oven.

2. Second polymerization

Subsequently, the above obtained polyethylene copolymer pellet 600 g, n-butyl acrylate 390 g, ethyl acrylate 60 g, 2-ethylhexyl acrylate 210 g, methacrylic acid 75 g, lauroyl peroxide 14.1 g, and water 4.0 kg were put into a 5L reactor equipped with a stirrer and a heater and the reactor was sealed up. While reaction mixture was being stirred, high pressure nitrogen gas was fed into a sealed reactor and then discharged, removing oxygen. To reduce oxygen density, the above operation was carried out three times. Subsequently, temperature of the reactor was raised to 55 °C and monomer was absorbed into pellet for two hours. For complete absorption of input monomer, temperature of the reactor was raised to 60 °C and the reactor was stirred for two hours. For polymerization of monomer, temperature of the reactor was raised to 65 °C and the reactor was stirred for one hour; subsequently, the reactor was stirred for two hours after being raised to 70 °C. While heat caused by polymerization being watched, the reactor was maintained above 75 °C for one hour and reaction was terminated. Obtained pellet was filtered out and flushed two times and dried at 85 °C for six hours in a hot blast oven and polyacrylate polymer with polyacrylate copolymer distributed in material resin was obtained.

Polyamide resin pellet was obtained by well mixing the polyacrylate polymer 0.5 kg obtained from the above polymerization, with polyamide 6 (a product of KOPLA company whose model name is U160ER) 4.5 kg and heat stabilizer (Ciba Specialty Chemicals, Irganox 1010) and then kneading them at twin screw extruder (SL Platek, 51 mm, L/D = 40).

Obtained pellet was molded into a test piece for evaluation of physical properties by using an injection molding machine according to ASTM standards and physical properties were evaluated according to the same standards.

[Experimental example 2]

Polyacrylate polymer was fabricated by using the same method as experimental example 1 except that for second polymerization, n-butyl acrylate 180 g, ethyl acrylate 480 g, methacrylic acid 90 g, and lauroyl peroxide 18.0 g were used but 2-ethylhexyl acrylate was not used. Next, polyamide 6 and polyacrylate polymer were kneaded with the same ratio of experimental example 1 and physical properties were evaluated.

[Experimental example 3]

Polyacrylate polymer was fabricated by using the same method as experimental example 1 except that for second polymerization, n-butyl acrylate 480 g, ethyl acrylate 180 g, and lauroyl peroxide 16.4 g were used but 2-ethylhexyl acrylate was not used. Next, polyamide 6 and polyacrylate polymer were kneaded with the same ratio of experimental example 1 and physical properties were evaluated.

[Experimental example 4]

Polyacrylate polymer was fabricated by using the same method as experimental example 1 except that for second polymerization, n-butyl acrylate 480 g, ethyl acrylate 90 g, methacrylic acid 90 g, and lauroyl peroxide 22.7 g were used. Next, polyamide 6 and polyacrylate polymer were kneaded with the same ratio of experimental example 1 and physical properties were evaluated.

[Experimental example 5]

Polyacrylate polymer was fabricated by using the same method as experimental example 1 except that for second polymerization, n-butyl acrylate 180 g, ethyl acrylate 480 g, methacrylic acid 90 g, and lauroyl peroxide 7.2 g were used but 2-ethylhexyl acrylate was not used. Next, polyamide 6 and polyacrylate polymer were kneaded with the same ratio of experimental example 1 and physical properties were evaluated.

[Experimental example 6]

Polyacrylate polymer was fabricated by using the same method as experimental example 1 except that for second polymerization, n-butyl acrylate 660 g, methacrylic acid 90 g, and lauroyl peroxide 30.9 g were used but ethyl acrylate and 2-ethylhexyl acrylate were not used. Next, polyamide 6 and polyacrylate polymer were kneaded with the same ratio of experimental example 1 and physical properties were evaluated.

[Experimental example 7]

Polyacrylate polymer was fabricated by using the same method as experimental example 1 except that for second polymerization, n-butyl acrylate 600 g, ethyl acrylate 120 g, 2-ethylhexyl acrylate 120 g, methacrylic acid 120 g, and lauroyl peroxide 39.5 g were used. Next, polyamide 6 and polyacrylate polymer were kneaded with the same ratio of experimental example 1 and physical properties were evaluated.

[Experimental example 8]

Polyacrylate polymer was fabricated by using the same method as experimental example 1 except that for second polymerization, n-butyl acrylate 390 g, 2-ethylhexyl acrylate 90 g, methacrylic acid 105 g, and lauroyl peroxide 15.8 g were used but ethyl acrylate were not used. Next, polyamide 6 and polyacrylate polymer were kneaded with the same ratio of experimental example 1 and physical properties were evaluated.

[Experimental example 9]

Polyacrylate polymer was fabricated by using the same method as experimental example 1 except that for second polymerization, n-butyl acrylate 510 g, ethyl acrylate 180 g, methacrylic acid 60 g, and lauroyl peroxide 32.3 g were used but 2-ethylhexyl acrylate was not used. Next, polyamide 6 and polyacrylate polymer were kneaded with the same ratio of experimental example 1 and physical properties were evaluated.

[Experimental example 10]

Polyacrylate polymer was fabricated by using the same method as experimental example 1 except that for second polymerization, n-butyl acrylate 540 g, ethyl acrylate 180 g, methacrylic acid 30 g, and lauroyl peroxide 31.7 g were used but 2-ethylhexyl acrylate was not used. Next, polyamide 6 and polyacrylate polymer were kneaded with the same ratio of experimental example 1 and physical properties were evaluated.

[Experimental example 11]

Polyacrylate polymer was fabricated by using the same method as experimental example 1 except that for second polymerization, n-butyl acrylate 420 g, 2-ethylhexyl acrylate 240 g, methacrylic acid 90 g, and lauroyl peroxide 28.0 g were used but ethyl acrylate was not used. Next, polyamide 6 and polyacrylate polymer were kneaded with the same ratio of experimental example 1 and physical properties were evaluated.

[Experimental example 12]

Polyacrylate polymer was fabricated by using the same method as experimental example 1 except that for second polymerization, 2-ethylhexyl acrylate 240 g, methacrylic acid 120 g, lauroyl peroxide 28.6 g were used but ethyl acrylate was not used. Next, polyamide 6 and polyacrylate polymer were kneaded with the same ratio of experimental example 1 and physical properties were evaluated.

[Experimental example 13]

Polyacrylate polymer was fabricated by using the same method as experimental example 1 except that for second polymerization, methacrylic acid 90 g and lauroyl peroxide 14.5 g were used.

Next, pellet comprising polyacrylate polymer was fabricated by well mixing poly (ethylene-co-methyl acrylate) (manufactured by Dupont, melt index 2 g/10min) 3.5 kg, which is polyethylene copolymer, the fabricated polyacrylate polymer 3.5 kg, and heat stabilizer (Ciba Specialty Chemicals, Irganox 1010) 14 g and then kneading them at twin screw extruder.

Fabricated pellet was kneaded with polyamide 6 by using the same method of experimental example 1 and physical properties were evaluated.

[Experimental example 14]

Polyacrylate polymer was fabricated by using the same method as experimental example 1 except that for second polymerization, n-butyl acrylate 404.6 g, acrylic acid 75.4 g, and lauroyl peroxide 14.8 g were used but methacrylic acid was not used. Next, polyamide 6 and polyacrylate polymer were kneaded with the same ratio of experimental example 1 and physical properties were evaluated.

[Experimental example 15]

Polyacrylate polymer was fabricated by using the same method as experimental example 1 except that for second polymerization, lauryl methacrylate 210 g, methacrylic acid 90 g, and lauroyl peroxide 13.7 g were used but 2-ethylhexyl acrylate was not used. Next, polyamide 6 and polyacrylate polymer were kneaded with the same ratio of experimental example 1 and physical properties were evaluated.

[Experimental example 16]

Polyacrylate polymer was fabricated by using the same method as experimental example 1 except that for second polymerization, n-butyl acrylate 345 g, 2-ethylhexyl acrylate 240 g, methacrylic acid 105 g, and lauryl methacrylate 7.2 g were used. Next, polyamide 6 and polyacrylate polymer were kneaded with the same ratio of experimental example 1 and physical properties were evaluated.

[Experimental example 17]

Polyacrylate polymer was fabricated by using the same method as experimental example 1 except that for second polymerization, n-butyl acrylate 405 g, ethyl acrylate 48 g, 2-ethylhexyl acrylate 192 g, methacrylic acid 105 g, and lauryl methacrylate 9.4 g were used.

Fabricated polyacrylate polymer was blended with polyethylene copolymer. Pellet was fabricated by well mixing fabricated polyacrylate polymer 4.2 kg, poly (ethylene-co-butyl acrylate) (manufactured by Dupont, melt index 4 g/10min) 2.8 kg as polyethylene copolymer, and heat stabilizer (Ciba Specialty Chemicals, Irganox 1010) 7 g and then kneading them at twin screw extruder.

Fabricated pellet was kneaded with polyamide 6 by using the same method of experimental example 1 and physical properties were evaluated.

[Experimental example 18]

Polyacrylate polymer was fabricated by using the same method as experimental example 1 except that for second polymerization, n-butyl acrylate 597 g, ethyl acrylate 48 g, methacrylic acid 105 g, and lauryl methacrylate 10.1 g were used but 2-ethylhexyl acrylate was not used.

Pellet was fabricated by well mixing fabricated polyacrylate polymer 4.2 kg, poly (ethylene-co-butyl acrylate) (manufactured by Dupont, melt index 4 g/10min) 2.8 kg as polyethylene copolymer, and heat stabilizer (Ciba Specialty Chemicals, Irganox 1010) 7 g and then kneading them at twin screw extruder.

Polyamide 64.6 kg and the fabricated pellet 0.4 kg were kneaded at twin screw extruder and a test piece was fabricated and physical properties were evaluated.

[Experimental example 19]

Pellet comprising polyacrylate polymer was fabricated by fabricating polyacrylate polymer by using the same method of experimental example 18 and subsequent kneading with polyethylene copolymer.

The same method of experimental example 1 was used. That is to say, pellet 0.5 kg comprising polyacrylate polymer was well mixed with polyamide 6 (a product of KOPLA company whose model name is U160ER) 4.5 kg and heat stabilizer (Ciba Specialty Chemicals, Irganox 1010) 5 kg and kneaded at twin screw extruder (SM Platek, 51 mm, L/D = 40). Polyamide resin pellet was then obtained and was molded into a test piece for evaluation of physical properties, which were evaluated according to the same standards.

[Experimental example 20]

Polyacrylate polymer was fabricated by using the same method as experimental example 1 except that for first polymerization, polyamide 6 1.0 kg and poly (ethylene-co-butyl acrylate) (manufactured by Dupont, melt index 4 g/10min.) 4.0 kg were kneaded at twin screw extruder and used as material resin; and for second polymerization, n-butyl acrylate 477 g, ethyl acrylate 48 g, 2-ethylhexyl acrylate 60 g, methacrylic acid 105 g, and lauryl methacrylate 10.1 g were used.

Next, pellet was fabricated by well mixing the polyacrylate polymer 4.2 kg, poly (ethylene-co-butyl acrylate) (manufactured by Dupont, melt index 4 g/10min) 2.8 kg as polyethylene copolymer, and heat stabilizer (Ciba Specialty Chemicals, Irganox 1010) 7 g and then kneading them at twin screw extruder.

Polyamide 64.6 kg and the fabricated pellet 0.4 kg were kneaded at twin screw extruder and a test piece was fabricated and physical properties were evaluated.

[Experimental example 21]

Pellet comprising polyacrylate polymer was fabricated by fabricating polyacrylate polymer by using the same method of experimental example 20 and subsequent kneading with polyethylene copolymer.

The same method of experimental example 1 was used. That is to say, pellet 0.5 kg comprising polyacrylate polymer was well mixed with polyamide 6 (a product of KOPLA company whose model name is U160ER) 4.5 kg and heat stabilizer (Ciba Specialty Chemicals, Irganox 1010) 5 kg and kneaded at twin screw extruder (SM Platek, 51 mm, L/D = 40). Polyamide resin pellet was then obtained and was molded into a test piece for evaluation of physical properties, which were evaluated according to the same standards.

[Experimental example 22]

Polyacrylate polymer was fabricated by using the same method as experimental example 1 except that for first polymerization, polyamide 6 1.5 kg and poly (ethylene-co-butyl acrylate) (manufactured by Dupont, melt index 4 g/10min.) 4.5 kg were kneaded at twin screw extruder and used as material resin; and for second polymerization, n-butyl acrylate 504 g, 2-ethylhexyl acrylate 99 g, methyl methacrylate 48 g, methacrylic acid 99 g, and lauryl methacrylate 15.2 g were used but ethyl acrylate was not used.

Pellet comprising polyacrylate polymer was fabricated by well mixing fabricated polyacrylate polymer 4.2 kg, poly (ethylene-co-butyl acrylate) (manufactured by Dupont, melt index 4 g/10min) 2.8 kg as polyethylene copolymer, and heat stabilizer (Ciba Specialty Chemicals, Irganox 1010) 7 g and then kneading them at twin screw extruder.

The same method of experimental example 1 was then used. That is to say, pellet 0.5 kg comprising polyacrylate polymer was well mixed with polyamide 6 (a product of KOPLA company whose model name is U160ER) 4.5 kg and heat stabilizer (Ciba Specialty Chemicals, Irganox 1010) 5 kg and kneaded at twin screw extruder (SM Platek, 51 mm, L/D = 40). Polyamide resin pellet was then obtained and was molded into a test piece for evaluation of physical properties, which were evaluated according to the same standards.

[Comparative example 1]

Polyamide 6 and reformed ethylene-propylene-diene rubber were blended. FUSABOND 416D manufactured by Dupont was used as reformed ethylene-propylene-diene rubber. The above product is functional resin induced by chemical bonding of maleic acid anhydride with a basin of ethylene-propylene-diene rubber, providing various uses, particularly for additives to improve impact strength of engineering plastic.

Pellet was fabricated by mixing polyamide 6 (KOPLA, U160ER) 4.5 kg, FUABOND 416D 0.5 kg, and heat stabilizer (Ciba Specialty Chemicals, Irgnox 1010) 5 g and kneading them at twin screw extruder. Fabricated pellet was molded into a test piece in the same manner as experimental example 1 and physical properties were evaluated.

[Comparative example 2]

Pellet was fabricated by mixing polyamide 6 (KOPLA, U160ER) 4.0 kg, FUABOND 416D 1.0 kg, and heat stabilizer (Ciba Specialty Chemicals, Irganox 1010) 5 g and kneading them at twin screw extruder. Fabricated pellet was molded into a test piece in the same manner as experimental example 1 and physical properties were evaluated.

[Comparative example 3]

Polyamide 6 and reformed ethylene-octene rubber were blended. FUSABOND 493D manufactured by Dupont was used as reformed ethylene-octene rubber.

Pellet was fabricated by mixing polyamide 6 (KOPLA, U160ER) 4.0 kg, FUABOND 493D 1.0 kg, and heat stabilizer (Ciba Specialty Chemicals, Irganox 1010) 5 g and kneading them at twin screw extruder. Fabricated pellet was molded into a test piece in the same manner as experimental example 1 and physical properties were evaluated.

[Comparative example 4]

Polyamide 6 and polyethylene copolymer were blended. Poly (ethylene-co-methyl acrylate) (a product of Dupont, ELVALOY 1224 AC) was used as polyethylene copolymer. The above product is polyethylene copolymer having methyl acrylate at main chain, providing various uses, particularly for additives to improve impact strength of engineering plastic such as polyamide.

Pellet was fabricated by mixing polyamide 6 (KOPLA, U160ER) 4.5 kg, ELVALOY 1224 AC 0.5 kg, and heat stabilizer (Ciba Specialty Chemicals, Irganox 1010) 5 g and kneading them at twin screw extruder. Fabricated pellet was molded into a test piece in the same manner as experimental example 1 and physical properties were evaluated.

[Comparative example 5]

Polyamide 6 and reformed ethylene-propylene-diene rubber were blended. Kumho polychem KEP-A1130 was used as reformed ethylene-propylene-diene rubber. The above product is functional resin induced by chemical bonding of maleic acid anhydride with a basin of ethylene-propylene-diene rubber, providing various uses, particularly for additives to improve impact strength of engineering plastic.

Pellet was fabricated by mixing polyamide 6 (KOPLA, U160ER) 4.5 kg, Kumho polychem KEP-A1130 0.5 kg, and heat stabilizer (Ciba Specialty Chemicals, Irganox 1010) 5 g and kneading them at twin screw extruder. Fabricated pellet was molded into a test piece in the same manner as experimental example 1 and physical properties were evaluated.

[Comparative example 6]

Pellet was fabricated by mixing polyamide 6 (KOPLA, U160ER) 4.0 kg, Kumho polychem KEP-A1130 1.0 kg, and heat stabilizer (Ciba Specialty Chemicals, Irganox 1010) 5 g and kneading them at twin screw extruder. Fabricated pellet was molded into a test piece in the same manner as experimental example 1 and physical properties were evaluated.

[Comparative example 7]

Polyacrylate polymer was fabricated by using the same method as experimental example 2 except that for second polymerization, 1, 6-hexanedioldiacrylate 1.2 g and lauroyl peroxide 19.2 g were used.

Next, a test piece was molded by kneading polyamide 6 and the polyacrylate polymer in the same manner as experimental example 1 and physical properties were evaluated.

[Comparative example 8]

Polyacrylate polymer was fabricated by using the same method as experimental example 1 except that for second polymerization, n-butyl acrylate 330 g, 2-ethylhexyl acrylate 240 g, methacrylic acid 240 g, and lauroyl peroxide 34.7 g were used but ethyl acrylate was not used.

Next, a test piece was molded by kneading polyamide 6 and the polyacrylate polymer in the same manner as experimental example 1 and physical properties were evaluated.

[Comparative example 9]

Polyacrylate polymer was fabricated by using the same method as experimental example 1 except that for second polymerization, n-butyl acrylate 120 g, 2-ethylhexyl acrylate 180 g, methyl methacrylate 30 g, methacrylic acid 390 g, and lauroyl peroxide 33.6 g were used but ethyl acrylate was not used.

Next, a test piece was molded by kneading polyamide 6 and the polyacrylate polymer in the same manner as experimental example 1 and physical properties were evaluated.

Table 1 in the following shows results of evaluation of mechanical properties according to the experimental examples 1 to 23 and Table 2 in the following shows results of evaluation of mechanical properties according to the comparative examples 1 to 9.

**[Table 1]**

| | Polyacrylate polymer content (wt%) | Yield point tensile strength (MPa) | Tensile elongation at break point (%) | Flexural modulus (MPa) | Impact strength (23 °C ) Izod impact strength, (kgf-cm/cm) | Impact strength (-40 °C) Izod impact strength, (kgf-cm/cm) |
|---|---|---|---|---|---|---|
| Experimental example 1 | 10 | 58.5 | 420 | - | 97 | - |
| Experimental example 2 | 10 | 59.1 | 360 | - | 113 | - |
| Experimental example 3 | 10 | 58.4 | 350 | - | 130 | - |
| Experimental example 4 | 10 | 60.3 | 380 | - | 125 | - |
| Experimental example 5 | 10 | 58.9 | 370 | - | 131 | - |
| Experimental example 6 | 10 | 52.9 | 360 | - | 137 | - |
| Experimental example 7 | 10 | 50.5 | 310 | - | 138 | - |
| Experimental example 8 | 10 | 59.9 | 220 | - | 118 | - |
| Experimental example 9 | 10 | 47.5 | 660 | - | 67 | - |
| Experimental example 10 | 10 | 49.9 | 560 | - | 30 | - |
| Experimental example 11 | 10 | 51.2 | 530 | - | 106 | - |
| Experimental example 12 | 10 | 51.6 | 370 | - | 138 | - |
| Experimental example 13 | 10 | 57.0 | 450 | - | 100 | - |
| Experimental example 14 | 10 | 60.2 | 100 | - | 18 | - |
| Experimental example 15 | 10 | 61.6 | 130 | - | 38 | - |
| Experimental example 16 | 10 | 61.6 | 280 | 2132 | 118 | 7.3 |
| Experimental example 17 | 10 | 65.0 | 330 | 2090 | 107 | 8.8 |
| Experimental example 18 | 8 | 64.4 | 450 | 2059 | 66 | - |
| Experimental example 19 | 10 | 61.0 | 370 | 2074 | 125 | - |
| Experimental example 20 | 8 | 69.4 | 360 | 2153 | 48 | - |
| Experimental example 21 | 10 | 67.9 | 310 | 2215 | 88 | - |
| Experimental example 22 | 10 | 62.8 | 370 | 1970 | 115 | - |

| | | | | | | |
|---|---|---|---|---|---|---|
| *Test piece: notched, thickness 3.2 mm | | | | | | |

**[Table 2]**

| | Polyacrylate polymer content (wt%) | Yield point tensile strength (MPa) | Tensile elongation at break point (%) | Flexural modulus (MPa) | Impact strength (23 °C ) Izod impact strength, (kgf-cm/cm) | Impact strength (-40 °C) Izod impact strength, (kgf-cm/cm) |
|---|---|---|---|---|---|---|
| Comparative example 1 | 10 | 53.6 | 210 | - | 21 | - |
| Comparative example 2 | 20 | 46.7 | 103 | 1585 | 35 | - |
| Comparative example 3 | 20 | 48.2 | 95 | 1615 | 34 | - |
| Comparative example 4 | 10 | 53.4 | 260 | - | 11 | - |
| Comparative example 5 | 10 | 49.4 | 145 | 1588 | 24 | - |
| Comparative example 6 | 20 | 41.6 | 275 | 1381 | 71 | 16 |
| Comparative example 7 | 10 | 52.1 | 234 | - | 12.5 | - |
| Comparative example 8* | 10 | - | - | - | - | - |
| Comparative example 9* | 10 | - | - | - | - | - |

| | | | | | | |
|---|---|---|---|---|---|---|
| * Test piece: notched, thickness 3.2 mm * a: injection molding was not conducted | | | | | | |

With reference to the Table 1, polyacrylate-based product fabricated according to experimental examples 1 to 22 of the present invention has excellent mechanical properties of impact strength, flexural modulus, and tensile elongation at break point compared with comparative examples 1 to 9 shown in the Table 2.

In particular, from comparison of experimental example 2 with comparative example 7, when polymerization is conducted by adding 1, 6-hexanedioldiacrylate - which is a crosslinking monomer - under the same chemical composition as in comparative example 7, it can be checked that reinforcement effect of impact strength of polyamide 6 due to polyacrylate polymer becomes very low.

For the cases of comparative examples 8 and 9, processability is so inferior that test pieces could not be obtained by injection molding. In particular, for the case of comparative example 9, defect has occurred during kneading process using polyamide 6 resin and extruder; thus pellet could not be obtained.

**Experiment 2: evaluation of mechanical properties of polyamide-based resin composition according to addition of polyacrylate polymer**

[Experimental example 23]

Pellet comprising polyacrylate polymer was fabricated by using the same method of experimental example 22. Next, polyamide resin pellet was obtained by well mixing pellet 2.5 kg comprising polyacrylate polymer with polyamide 6 (a product of KOPLA company whose model name is U160ER) 4.75 kg and heat stabilizer (Ciba Specialty Chemicals, Irganox 1010) 5 g and kneading them at twin screw extruder (SM Platek, 51 mm, L/D = 40).

Obtained pellet was molded into a test piece for evaluation of physical properties by using an injection molding machine according to ASTM standards and physical properties were evaluated according to the same standards.

[Experimental example 24]

Polyamide resin pellet was obtained by using the same method of experimental example 23 except that pellet 0.4 kg comprising polyacrylate polymer was kneaded with polyamide 6 (a product of KOPLA company whose model is U160ER) 4.6 kg and was molded into a test piece for evaluation of physical properties according to ASTM standards and physical properties were evaluated according to the same standards.

[Experimental example 25]

Polyamide resin pellet was obtained by using the same method of experimental example 23 except that pellet 0.75 kg comprising polyacrylate polymer was kneaded with polyamide 6 (a product of KOPLA company whose model is U160ER) 4.25 kg and was molded into a test piece for evaluation of physical properties according to ASTM standards and physical properties were evaluated according to the same standards.

[Experimental example 26]

Polyamide resin pellet was obtained by using the same method of experimental example 13 except that pellet 1.0 kg comprising polyacrylate polymer was kneaded with polyamide 6 (a product of KOPLA company whose model is U160ER) 4.0 kg and was molded into a test piece for evaluation of physical properties according to ASTM standards and physical properties were evaluated according to the same standards.

**[Table 3]**

| | Polyacrylate polymer content (wt%) | Yield point tensile strength (MPa) | Tensile elongation at break point (%) | Flexural modulus (MPa) | Impact strength (23 °C) Izod impact strength (kgf-cm/cm) | Impact strength (-40 °C) Izod impact strength (kgf-cm/cm) |
|---|---|---|---|---|---|---|
| Experimental example 23 | 5 | 68.9 | 166 | 2166 | 12.3 | - |
| Experimental example 24 | 8 | 65.5 | 501 | 2044 | 24.0 | 4.3 |
| Experimental example 25 | 15 | 55.8 | 345 | 1834 | 119.0 | 11.3 |
| Experimental example 26 | 20 | 50.1 | 403 | - | 130.0 | - |

As described in detail above, polyamide resin composition comprising polyacrylate-based polymer according to one embodiment of the present invention possesses excellent mechanical strength and flexural modulus.

## Claims

1. Polyacrylate-based polymer comprising:
material resin comprising polyamide or polyethylene-based resin; and
polyacrylate copolymer obtained by absorption of acrylate monomer, functional monomer chosen from acrylic acid, methacrylic acid and a mixture of acrylic acid and methacrylic acid, and polymerization initiator, into the material resin and subsequent polymerization,
wherein 128 to 955 parts by weight of the polyacrylate copolymer is dispersed in every 100 parts by weight of the material resin.

2. The polyacrylate-based polymer of claim 1, wherein said polyethylene-based resin is polyethylene copolymer, polyethylene with pendant functional groups or a mixture thereof.

3. The polyacrylate-based polymer of claim 2, wherein said polyethylene with pendant functional group is poly (ethylene-co-1-octene), poly(ethylene-co-1-butene), poly(ethylene-co-propylene), or poly(ethylene-co-propylene-co-diene).

4. The polyacrylate-based polymer of claim 2, wherein said polyethylene copolymer is poly(ethylene-co-methylacrylate), poly(ethylene-co-ethylacrylate), poly(ethylene-co-butylacrylate), paly(ethylene-co-acrylic acid), poly(ethylene-co-methacrylic acid), paly(ethylene-co-glycidyl-methacrylate), poly(ethylene-co-vinylacetate), poly(ethylene-co-acrylamide), poly(ethylene-co-acrylonitrile) or poly(ethylene-co-maleic acid).

5. The polyacrylate-based polymer of claim 1, wherein said acrylate monomer is alkyl acrylate monomer, alkyl methacrylate monomer, or a mixture thereof.

6. The polyacrylate-based polymer of claim 1, being formed by absorption of acrylate monomer and polymerization initiator into material resin comprising polyamide or polyethylene resin dispersed in water and subsequent first-polymerization of the monomers; and absorption of acrylate monomer, functional monomer, and polymerization initiator into product made from first-polymerization and subsequent second-polymerization of the monomers.

7. The polyacrylate-based polymer of claim 6, wherein said first-polymerization further comprises absorption of a functional monomer into said material resin.

8. The polyacrylate-based polymer of claim 7, wherein for first-polymerization, 0.1 to 15 parts by weight of the functional monomer are used for every 100 parts by weight of the material resin and for second-polymerization, 2 to 35 parts by weight of the functional monomer are used for every 100 parts by weight of product made from first-polymerization.

9. The polyacrylate-based polymer of claim 6 or 7, wherein 0.2 to 2.5 mol % of the polymerization initiator is used for total sum of molecular numbers of the monomers and polymerization initiator.

10. Process for manufacturing a polyacrylate-based polymer, comprising:
first-polymerization step of absorbing 50 to 200 parts by weight of acryl monomer and polymerization initiator into 100 parts by weight of material resin comprising polyamide or polyethylene-based resin dispersed in 500 to 1000 parts by weight of water, and first-polymerizing the monomers; and
second-polymerization step of absorbing 50 to 200 parts by weight of acrylate monomer, 2 to 35 parts by weight of functional monomer chosen from among acrylic acid, methacrylic acid and a mixture of the acrylic acid and the methacrylic acid, and polymerization initiator, into 100 parts by weight of the products from the said first-polymerization, and second-polymerizing the monomers;
wherein 0.2 to 2.5 mol % of the polymerization initiator is used for total sum of molecular numbers of the monomers and polymerization initiator in each of first and second polymerization.

11. The Process for manufacturing a polyacrylate-based of claim 10, wherein said polyethylene-based resin is polyethylene copolymer, polyethylene with pendant functional groups or mixture of the above.

12. The Process for manufacturing a polyacrylate-based of claim 11, wherein said polyethylene with pendant functional groups is poly (ethylene-co-1-octene), poly(ethylene-co-1-butene), poly(ethylene-co-propylene), or poly(ethylene-co-propylene-co-diene).

13. The Process for manufacturing a polyacrylate-based of claim 11, wherein said polyethylene copolymer is poly (ethylene-co-methylacrylate), poly(ethylene-co-ethylacrylate), poly(ethylene-co-butylacrylate), poly (ethylene-co-acrylic acid), poly(ethylene-co-methacrylic acid), poly(ethylene-co-glycidyl-methacrylate), poly(ethylene-co-vinylacetate), poly(ethylene-co-acrylamide), poly(ethylene-co-acrylonitrile) or poly(ethylene-co-maleic acid).

14. The Process for manufacturing a polyacrylate-based of claim 10, wherein said acrylate monomer is alkyl acrylate monomer, alkyl methacrylate monomer, or a mixture thereof.

15. The Process for manufacturing a polyacrylate-based of claim 10, wherein said first-polymerization step further comprises absorption of 0.1 to 15 parts by weight of a functional monomer into 100 parts by weight of said material resin.
